Europäisches Patentamt

(19) European Patent Office

Office européen des brevets

(11) Numéro de publication : **0 174 671 B1**

(12) **FASCICULE DE BREVET EUROPÉEN**

(45) Date de publication du fascicule du brevet :
13.12.89

(51) Int. Cl.⁴ : **G 01 T 1/164**

(21) Numéro de dépôt : **85201072.7**

(22) Date de dépôt : **03.07.85**

(54) Perfectionnement apporté à une caméra pour la détection de rayonnements X et gamma, caméra dont le bloc scintillateur possède une fenêtre d'entrée formée d'une structure support mécaniquement rigide et très faiblement absorbante auxdits rayonnements.

(30) Priorité : 06.07.84 FR 8410786

(43) Date de publication de la demande :
19.03.86 Bulletin 86/12

(45) Mention de la délivrance du brevet :
13.12.89 Bulletin 89/50

(84) Etats contractants désignés :
DE FR GB NL

(56) Documents cités :
EP--A-- 0 039 103
EP--A-- 0 090 594
FR--A-- 1 372 722
US--A-- 2 806 958
US--A-- 3 262 002
US--A-- 3 396 300
PATENTS ABSTRACTS OF JAPAN, vol. 7, no. 127 (P-201)[1272], 3 juin 1983; & JP - A - 58 45 584 (HITACHI DENSEN K.K.) 16-03-1983

(73) Titulaire : **LABORATOIRES D'ELECTRONIQUE ET DE PHYSIQUE APPLIQUEE L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**DE GB NL**

(72) Inventeur : **Martin, Guy Noel**
**Société Civile S.P.I.D. 209, rue de l'Université**
**F-75007 Paris (FR)**
Inventeur : **Jatteau, Michel René**
**Société Civile S.P.I.D. 209, rue de l'Université**
**F-75007 Paris (FR)**

(74) Mandataire : **Landousy, Christian et al**
**Société Civile S.P.I.D. 209, Rue de l'Université**
**F-75007 Paris (FR)**

## Description

L'invention concerne un perfectionnement apporté à une caméra pour la détection de rayonnements X et γ pouvant être utilisée en imagerie avec un collimateur, et comprenant un bloc scintillateur composé d'un cristal scintillant, d'une fenêtre d'entrée et d'une fenêtre optique de sortie, le bloc scintillateur coopérant avec un intensificateur de lumière associé à un localisateur de scintillations, le localisateur de scintillations étant lui-même connecté à une chaîne de mesure et de visualisation du signal.

Une telle caméra est connue. Le brevet français n° 2 481 466 traite d'une caméra à scintillations qui comporte un bloc scintillateur avec une fenêtre d'entrée constituée d'une feuille mince généralement en aluminium et une fenêtre optique de sortie transparente à la lumière émise par les scintillations, un intensificateur de lumière, un localisateur de scintillations, une chaîne de mesure et de visualisation.

L'intensificateur de lumière est constitué d'une mosaïque de modules identiques, indépendants, chacun présentant une face d'entrée et une face de sortie parallèles ; ces modules étant juxtaposés et formant une lame à faces parallèles, dont la face d'entrée muni de photocathodes est couplée optiquement à la face de sortie du cristal scintillant par l'intermédiaire de la fenêtre optique de sortie du bloc scintillateur, fenêtre épaisse de verre, de masse importante assurant la tenue mécanique du cristal scintillant. Le localisateur de scintillations est formé d'un réseau de photodétecteurs, dont les faces d'entrée sont en regard de la face de sortie de l'intensificateur de lumière. Les photodétecteurs transforment la lumière émise par l'intensificateur en signaux électriques. Des circuits électroniques appropriés effectuent une combinaison adéquate des signaux de sortie des photomultiplicateurs pour, d'une part, en déterminer l'énergie du rayonnement émis par la source de rayons γ et, d'autre part, en déduire des signaux de coordonnées x et y de la position de la scintillation dans le scintillateur donc, de la source de rayons γ qui a donné naissance à cette scintillation, lesquels signaux sont affichés sur un écran.

Dans la conception de caméra avec intensificateur, un couplage aussi étroit que possible est préférable entre la face de sortie du cristal scintillant et la face d'entrée de l'intensificateur de lumière.

Or, contre la face de sortie du cristal scintillant se trouve la fenêtre optique de sortie du bloc scintillateur. Cette fenêtre, d'une épaisseur d'environ 10 mm, indispensable à la tenue mécanique du bloc scintillateur, limite le couplage des ensembles devant coopérer étroitement avec la face de sortie du cristal scintillant.

Le but de l'invention est de réaliser un perfectionnement à une caméra dont la fenêtre optique de sortie du bloc scintillateur, fenêtre de très faible épaisseur, permet un couplage très étroit entre la face de sortie du cristal scintillant et la face d'entrée de l'intensificateur de lumière, ce qui améliore les résolutions spatiale et spectrale de la caméra.

L'invention est caractérisée par le fait que le bloc scintillateur possède une fenêtre d'entrée formée d'une structure rigide très peu absorbante aux rayonnements X et γ et assurant le support et la tenue mécaniques dudit bloc scintillateur. Une telle structure, du fait de son très faible coefficient d'absorption, ne modifie pratiquement pas la propagation des rayonnements X et γ vers le cristal scintillant. Sa rigidité mécanique permet, de réduire la fonction de la fenêtre optique de sortie du bloc scintillateur à un simple rôle de protection du cristal scintillant, de ce fait la fenêtre est très mince, ou encore, permet de supprimer ladite fenêtre optique de sortie dans le cas où le scintillateur est un cristal non hygroscopique. De plus le faible poids de la fenêtre d'entrée permet une manutention plus aisée du bloc scintillateur et de la caméra.

Dans un mode préférentiel de réalisation de la structure support formant la fenêtre d'entrée du bloc scintillateur est composée d'au moins une feuille, raidie par une armature en forme de nid d'abeilles, l'armature étant assujettie perpendiculairement à une face de ladite feuille. Dans ce type de structure les alvéoles du nid d'abeilles, on leur axe longitudinal dans le sens de propagation du rayonnement créant les scintillations. Seules les feuilles placées perpendiculairement audit axe longitudinal interviennent faiblement dans l'absorption aux rayonnements de la fenêtre. La rigidité de cette structure autorise une épaisseur de fenêtre d'entrée suffisamment mince pour que, lorsqu'on utilise la caméra avec un collimateur, en imagerie, ses performances ne soient pas dégradées, ou soient dégradées de façon négligeable.

Dans un autre mode préférentiel de réalisation la structure support formant la fenêtre d'entrée du bloc scintillateur est composée d'au moins une feuille, raidie mécaniquement par des moulures formant saillies, la superposition de deux ou plusieurs de ces feuilles matérialisant les alvéoles d'un nid d'abeilles. Cette structure permet de réaliser un support rigide avec des feuilles minces qui sans moulure ne présentent aucune raideur mécanique.

Dans une forme différente de réalisation, les moulures réalisées forment un ondulé.

En particulier, les alvéoles du nid d'abeilles sont remplis d'une matière durcissable, transparente aux rayonnements X et γ, pour la gamme d'énergie spécifiquement utilisée. Une telle matière durcissable, insérée dans les alvéoles permet d'augmenter la rigidité de la fenêtre support du bloc scintillateur et ainsi de réduire l'épaisseur de ladite fenêtre. La matière durcissable est choisie pour ses propriétés physiques, lui assurant une quasi-transparence aux rayonne-

ments X et γ.

La description qui suit et les dessins illustrent des exemples de réalisation de l'invention.

La figure 1 représente un exemple de réalisation d'une caméra perfectionnée vue en coupe.

La figure 2 donne un exemple de réalisation du bloc scintillateur vue en coupe conforme à l'invention.

La figure 3 est une vue de face, côté fenêtre d'entrée support du bloc scintillateur de la figure 2.

La figure 4 donne un autre exemple de réalisation du bloc scintillateur vue en coupe conforme à l'invention.

La figure 5 représente une vue de face, côté fenêtre d'entrée, support du bloc scintillateur de la figure 4.

La figure 6 donne un autre exemple de réalisation du bloc scintillateur vu en coupe conforme à l'invention.

La figure 7 représente une vue de face, côté fenêtre d'entrée, support du bloc scintillateur de la figure 6.

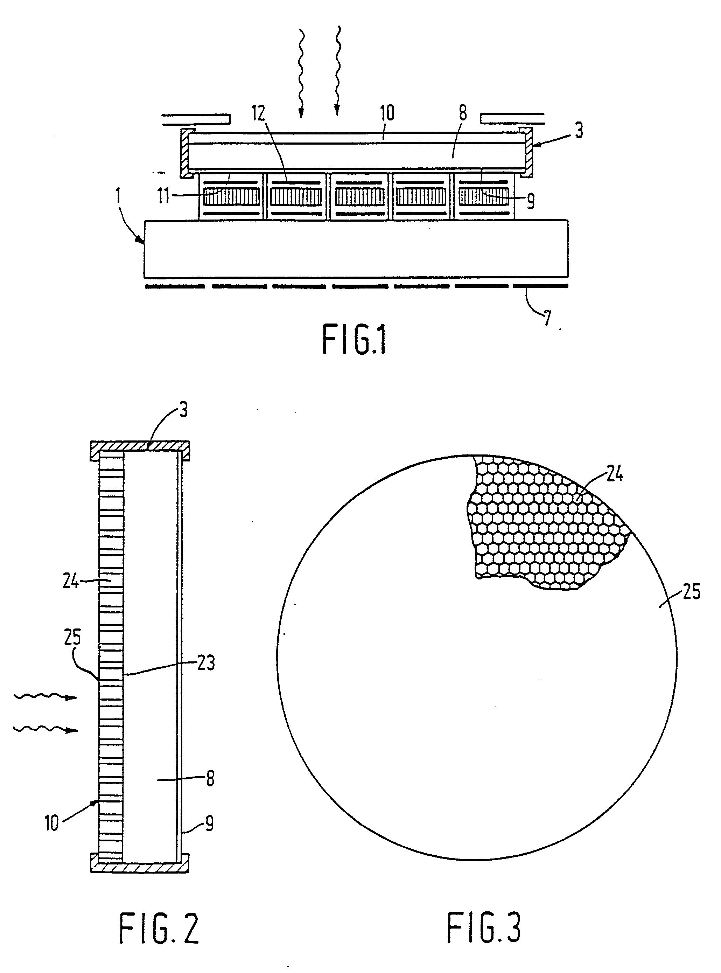

La figure 1 représente une vue en coupe de la caméra 1 améliorée, sur laquelle est représenté le bloc scintillateur 3 composé du cristal scintillant 8, de la fenêtre optique de sortie 9 du bloc scintillateur et de la fenêtre d'entrée 10 mécaniquement rigide. La fenêtre 9, très mince, est en contact avec la face d'entrée 11 de l'intensificateur 12 de lumière, ce qui permet au cristal scintillant 8 de coopérer étroitement avec l'intensificateur 12. Le réseau de photodétecteurs 7 forme le localisateur de scintillations.

La figure 2 montre un bloc scintillateur 3 en coupe, son cristal scintillant 8, sa fenêtre de sortie 9 et un exemple de réalisation de la structure mécaniquement rigide de la fenêtre d'entrée 10 conforme à l'invention. La fenêtre 10 dans cet exemple de réalisation est formée d'une feuille 23 mince épousant partiellement la face du cristal 8, face sur laquelle est déposée une fine couche réflectrice diffusante. Ladite feuille 23 coopère avec une structure en nid d'abeilles 24 qui lui est assujettie. Les axes longitudinaux des alvéoles sont perpendiculaires à la surface de la feuille 23 et assurent ainsi une rigidité totale. Il a été ajouté préférablement une feuille 25 insérant le nid d'abeilles entre ladite feuille 23 et la feuille 25, améliorant encore la rigidité mécanique de la structure.

La figure 3 montre la fenêtre d'entrée du bloc scintillateur sur laquelle il a été retirée une partie de la feuille 25 de façon à laisser apparaître les alvéoles du nid d'abeilles 24. Dans ce type de fenêtre, le matériau utilisé pour la construction de la structure est de l'aluminium en feuille d'environ 0,1 mm d'épaisseur ou tout autre matériau de faible densité, de nombre atomique faible, c'est-à-dire un matériau quasi-transparent aux rayonnements X et γ, la structure devant avoir un coefficient d'absorption atomique le plus faible possible, et une raideur permettant la tenue mécanique du cristal scintillant.

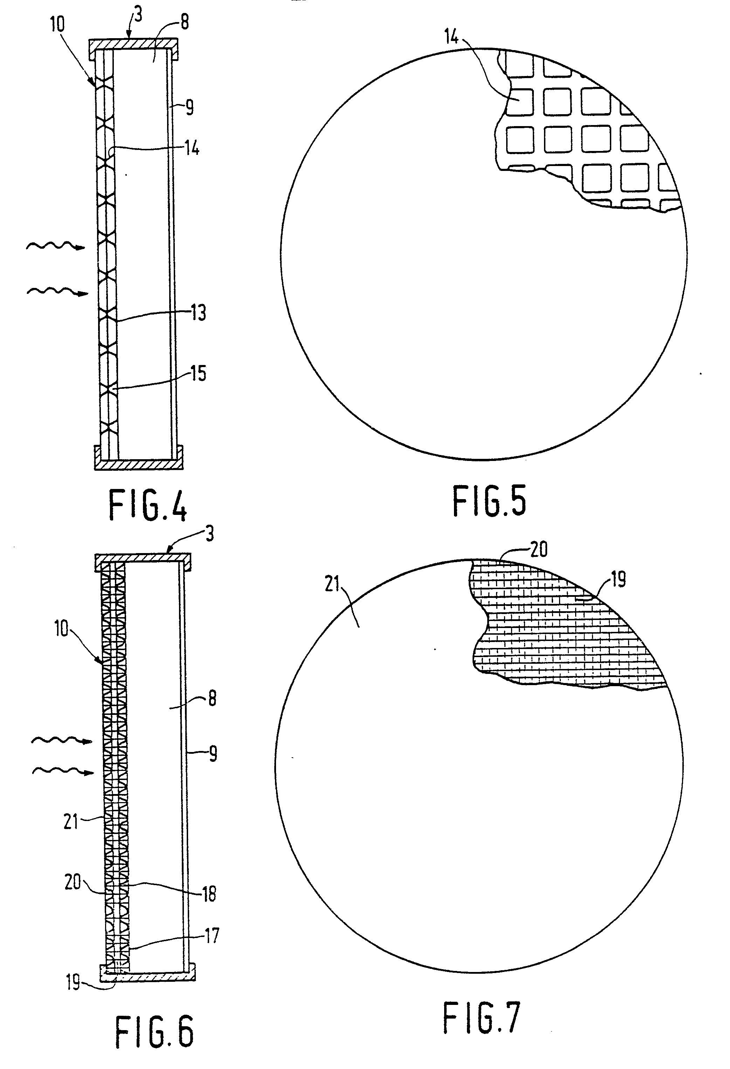

La figure 4 représente le bloc scintillateur 3 en coupe, son cristal scintillant 8, sa fenêtre optique de sortie 9 et la structure mécaniquement rigide de la fenêtre 10. La fenêtre 10 est composée, au moins d'une feuille mince 13 épousant partiellement la face du cristal 8, cette feuille est raidie mécaniquement par des moulures 14 formant saillies, les saillies dans cet exemple de réalisation ont une forme sensiblement carrée. La superposition de deux ou plusieurs feuilles matérialise les alvéoles 15 d'un nid d'abeilles.

La figure 5 est une vue de face de la fenêtre d'entrée 10 du bloc scintillateur sur laquelle une partie des saillies 14 a été représentée.

La figure 6 montre le bloc scintillateur 3 en coupe, et un autre exemple de réalisation de la structure de la fenêtre d'entrée 10. La fenêtre d'entrée 10 est composée d'une feuille 17 mince épousant partiellement la face du cristal scintillant 8, ladite feuille 17 coopère avec une première feuille ondulée 18 qui lui est assujettie et qui lui donne une raideur mécanique longitudinalement aux ondes. Il est préférable d'ajouter une seconde feuille ondulée 19 avec les ondes placées perpendiculairement aux ondes de la feuille ondulée 18. Une telle structure peut être composée, comme sur l'exemple de la figure, de trois feuilles ondulées 18, 19 et 20, et d'une feuille 21, sensiblement plane terminant la structure.

La figure 7 montre la fenêtre d'entrée du bloc scintillateur sur laquelle il a été retirée une partie de la feuille 21 de façon à laisser apparaître la feuille ondulée 19 et en pointillés, au-dessous, la feuille ondulée 20. Le matériau utilisé pour la réalisation d'une fenêtre peut être de l'aluminium en feuille ou tout autre matériau lamifié ou massif de faible densité, comme par exemple les composites de carbone, de bore, les matières synthétiques, les composés du bois (carton...), matériaux offrant une rigidité mécanique permettant le support du bloc scintillateur.

Le bloc scintillateur décrit, permet, grâce à la structure support mécaniquement rigide, d'accoler sur la face de sortie du cristal scintillant l'intensificateur de lumière et d'améliorer ainsi de façon conséquente la résolution spatiale et spectrale de la caméra.

Dans une application aux caméras de type Anger munies d'un plus grand nombre de photomultiplicateurs de plus petit diamètre que les caméras utilisées actuellement, et en vue d'améliorer les performances, il est nécessaire de rapprocher les fenêtres d'entrée des photomultiplicateurs de la face de sortie du cristal scintillant. Cela implique l'utilisation d'un bloc scintillateur muni d'une structure support mécaniquement rigide conforme à l'invention.

**Revendications**

1. Caméra pour la détection de rayonnements X et γ pouvant être utilisée en imagerie avec un collimateur, et comprenant un bloc scintillateur (3) composé d'un cristal scintillant (8), d'une fenêtre d'entrée (10) et d'une fenêtre optique de sortie (9), le bloc scintillateur (3) coopérant avec un localisateur de scintillations associé à une chaîne de mesure et de visualisation du signal, caractérisée en ce que le bloc scintillateur (3) possède une fenêtre d'entrée (10) formée d'une structure rigide très peu absorbante aux rayonnements X et γ et assurant le support et la tenue mécaniques dudit bloc scintillateur (3).

2. Bloc scintillateur pour caméra selon la revendication 1, caractérisé en ce que la structure support formant la fenêtre d'entrée (10) du bloc scintillateur (3) est composée d'au moins une feuille (23), raidie par une armature en forme de nid d'abeilles (24), l'armature étant assujettie perpendiculairement à une face de ladite feuille (23).

3. Bloc scintillateur pour caméra selon la revendication 1, caractérisé en ce que la structure support formant la fenêtre d'entrée (10) dudit bloc scintillateur (3) est composée d'au moins une feuille (13), raidie mécaniquement par des moulures (14) formant saillies, la superposition de deux ou plusieurs de ces feuilles matérialisant les alvéoles (15) d'un nid d'abeilles.

4. Bloc scintillateur selon la revendication 3, caractérisé en ce que les moulures (14) forment une feuille ondulée.

5. Bloc scintillateur pour caméra selon l'une des revendications 2 et 3, caractérisé en ce que le nid d'abeilles dont est formé l'armature a des alvéoles remplis d'une matière durcissable quasi-transparente aux rayonnements X et γ.

## Claims

1. A camera for detecting X and γ rays which can be used for imaging with a collimator and comprises a scintillation block (3) which is formed by a scintillation crystal (8), an entrance window (10) and an optical exit window (9), the scintillation block (3) cooperating with a scintillation localizer which is associated with a signal measuring and display chain, characterized in that the scintillation block (3) comprises an entrance window (10) which is formed by a rigid structure which absorbs X and γ rays to a very small extent only, and which provides support and mechanical strength for said scintillation block (3).

2. A scintillation block for a camera as claimed in Claim 1, characterized in that the supporting structure constituting the entrance window (10) of the scintillation block (3) is formed by at least one sheet (23) which is strengthened by a honeycomb structure (24), the structure being fastened perpendicularly to a face of said sheet (23).

3. A scintillation block for a camera as claimed in Claim 1, characterized in that the supporting structure constituting the entrance window (10) of said scintillation block (3) consists of at least one sheet (13) which is mechanically strengthened by profiles (14) forming projections, the superposition of two or more of these sheets building the cells (15) of a honey-comb structure.

4. A scintillation block as claimed in Claim 3, characterized in that the profiles (14) form a corrugated sheet.

5. A scintillation block for a camera as claimed in one of the Claims 2 and 3, characterized in that the honeycomb structure has cells which are filled with a hardenable material which is quasi-transparent for the X and γ rays.

## Patentansprüche

1. Detektionskamera für Röntgen- und Gammastrahlung, die zur Bildwiedergabe mit einem Kollimator verwendbar ist und einen Szintillatorblock (3) enthält, der aus einem Szintillationskristall (8), einem Eintrittsfenster (10) und einem optischen Austrittsfenster (9) aufgebaut ist, wobei der Szintillatorblock (3) mit einem Szintillationssucher zusammenarbeitet, der einer Meß- und Signalvisualisierungskette zugeordnet ist, dadurch gekennzeichnet, daß der Szintillatorblock (3) ein Eintrittsfenster (10) enthält, das eine starre und wenig Röntgen- und Gammastrahlung absorbierende Struktur hat und die Tragfunktion und mechanische Haltefunktion des Szintillatorblocks (3) erfüllt.

2. Szintillatorblock für eine Kamera nach Anspruch 1, dadurch gekennzeichnet, daß die das Eintrittsfenster (10) des Szintillatorblocks (3) bildende Tragstruktur aus wenigstens einem Blatt (23) besteht, das durch eine wabenförmige Bewehrung (24) versteift ist, die senkrecht auf einer Fläche des Blattes (23) befestigt ist.

3. Szintillatorblock für eine Kamera nach Anspruch 1, dadurch gekennzeichnet, daß die das Eintrittsfenster (10) des Szintillatorblocks (3) bildende Tragstruktur aus wenigstens einem Blatt (13) besteht, das durch Vorsprünge bildende Stege (14) mechanisch versteift ist, wobei die Überlagerung von zwei oder mehreren dieser Blätter die Zellen (15) einer Wabe darstellen.

4. Szintillatorblock für eine Kamera nach Anspruch 3, dadurch gekennzeichnet, daß die Stege (14) ein welliges Blatt bilden.

5. Szintillatorblock für eine Kamera nach einem der Ansprüche 2 und 3, dadurch gekennzeichnet, daß die Wabe, aus der die Bewehrung gebildet ist, in ihren Zellen mit einem aushärtbaren und für Röntgen- und Gammastrahlung quasidurchlässigen Werkstoff gefüllt ist.

FIG.1

FIG.2

FIG.3

FIG.4

FIG.5

FIG.6

FIG.7

2